# NEUE EUROPÄISCHE PATENTSCHRIFT

(11) **EP 0 671 875 B2**
(45) Veröffentlichungstag und Bekanntmachung des Hinweises auf die Entscheidung über den Einspruch: **24.05.2000**
(45) Hinweis auf die Patenterteilung: 08.05.1996
(21) Anmeldenummer: 93919207.6
(22) Anmeldetag: 28.08.1993
(51) Int. Cl.: A01J 5/04, F16L 41/06

(54) **MILCHROHRSCHIEBER**
MILK PIPE VALVE
VANNE DE TUYAU A LAIT

(30) Priorität: 02.12.1992 DE 4240521
(43) Veröffentlichungstag der Anmeldung: 20.09.1995
(73) Patentinhaber: Westfalia Separator AG, 59302 Oelde (DE)
(72) Erfinder: BÜCKER, Heinrich, D-33449 Langenberg (DE)
(74) Vertreter: Kahlhöfer, Hermann, Dipl.-Phys.
(86) Internationale Anmeldenummer: EP9302328
(87) Internationale Veröffentlichungsnummer: WO9412017

(56) Entgegenhaltungen:
- DE-A- 4 003 367
- LU-A- 54 175
- US-A- 2 881 010
- US-A- 2 949 276
- US-A- 3 010 739
- US-A- 3 011 755

## Beschreibung

Die Erfindung bezieht sich auf einen Milchrohrschieber, bestehend aus einer Schieberplatte, einem Schlauchanschlußteil und einem Sattelstück mit einem darin vorgesehenen Durchlaß, der über eine durch die Schieberplatte verschließbare Ringdichtung mit dem Innenraum einer Melkleitung verbunden ist, wobei die Schieberplatte durch Einschieben des Schlauchanschlußteiles in eine Position bewegbar ist, in der die Schieberplatte den Durchlaß freigibt und eine im Schlauchanschlußteil vorgesehene Öffnung mit dem Durchlaß in Wirkverbindung steht, und der Anpreßdruck von Schieberplatte und Schlauchanschlußteil gegen die Ringdichtung durch Führungselemente erzeugt wird.

Ein derartiger Milchrohrschieber ist beispielsweise bekannt aus der DE 40 03 367 A1. Er findet Verwendung im Bereich der Melktechnik, um Melkzeuge mit der Melkleitung zu verbinden. Zu diesem Zweck wird das Schlauchanschlußteil in die Führungselemente eingeführt und dadurch die Schieberplatte soweit aus der Verschlußstellung verschoben bis das Schlauchanschlußteil mit seiner Öffnung in Wirkverbindung mit dem Durchlaß im Sattelstück steht. Der Anpreßdruck des Sattelstückes gegen die Ringdichtung wird dabei erzeugt durch die Geometrie starrer Führungselemente, die so ausgelegt ist, daß zwischen dem Sattelstück und der Ringdichtung eine Vorspannung besteht. Durch unvermeidbare Fertigungstoleranzen ergeben sich aber nachteilige Abweichungen von der vorbestimmten Vorspannung. Außerdem können sich die Teile nach längerem Einsatz verformen oder die Ringdichtung kann verschleißen, wodurch die Vorspannung ebenfalls beeinflußt wird. Durch die vorgenannten Einflüsse kann die Dichtkraft zu groß oder zu klein werden, wodurch entweder ein müheloses Aufschieben bzw. Abziehen des Milchrohrschiebers nicht mehr gewährleistet oder eine zuverlässige Abdichtung nicht mehr gegeben ist.

Bei dem bekannten Milchrohrschieber wird das Sattelstück durch eine Schraubverbindung auf der Melkleitung befestigt. Abgesehen von dem hohen Montageaufwand, können sich derartige Verbindungen mit der Zeit lockern und damit zu einer Beeinträchtigung der korrekten Position des Sattelstückes auf der Melkleitung führen.

Der Erfindung liegt die Aufgabe zugrunde, einen Milchrohrschieber zu schaffen, bei dem die vorbestimmte Dichtkraft durch Verschleiß und Fertigungstoleranzen nicht beeinflußt wird und der ein müheloses Einführen des Milchrohrschiebers ermöglicht.

Diese Aufgabe wird dadurch gelöst, daß der Anpreßdruck der Führungselemente durch Federelemente erzeugt wird, die eine vorbestimmte Kraft auf die Führungselemente in Richtung auf die Ringdichtung erzeugen.

Da die Führungselemente nicht starr sondern federnd gegen die Schieberplatte bzw. dem Schlauchanschlußteil anliegen, wird die Dichtkraft nicht durch die Geometrie des Milchrohrschiebers sondern durch die Federelemente bestimmt. Dadurch wirken sich Fertigungstoleranzen nur im vernachlässigbar kleinen Umfang aus.

Bei einer vorteilhaften Ausgestaltung bestehen die Federelemente aus U-förmig gebogenem Federdraht, dessen erster Schenkel an den Führungselementen anliegt und dessen zweiter Schenkel an der den Führungselementen gegenüberliegenden Seite der Melkleitung vorgesehen ist. Durch die Federelemente wird somit nicht nur der erforderliche Anpreßdruck der Führungselemente erzeugt, sondern gleichzeitig das Sattelstück in der gewünschten Position auf der Melkleitung fixiert. Dadurch können Schraubverbindungen entfallen.

Eine besonders sichere Fixierung des Sattelstückes wird dadurch erreicht, daß die zweiten Schenkel der Federelemente gegen einen Lagerbock anliegen, dessen Innenkontur dem Außendurchmesser der Melkleitung angepaßt ist und der an seiner Außenseite mit Nuten zur Aufnahme der zweiten Schenkel der Federelemente versehen ist.

Bei einer weiteren vorteilhaften Ausgestaltung sind die Führungselemente mit zwei Abstützpunkten versehen, von denen der erste Abstützpunkt auf das Sattelstück und der zweite Abstützpunkt auf das Schlauchanschlußteil drückt, wobei die Führungselemente zwischen den Abstützpunkten mit einer Arretierung zur Aufnahme des ersten Schenkels eines Federelementes versehen sind. Bei dieser Anordnung wird die Federkraft aufgeteilt auf die beiden Abstützpunkte. Je nach Position der Arretierung für die Aufnahme des ersten Schenkels eines Federelementes werden den beiden Abstützpunkten unterschiedliche Federkräfte zugeteilt. Dadurch ist es möglich, die Klemmkraft für das Sattelstück auf der Melkleitung wesentlich größer auszuführen als die Anpreßkraft auf die Führungselemente. Somit kann eine zuverlässige Fixierung des Sattelstückes erreicht werden bei gleichzeitiger Begrenzung der Dichtkräfte auf den gewünschten Wert.

Eine besonders vorteilhafte Ausgestaltung wird dadurch erzielt, daß die Position der Arretierung und der beiden Abstützpunkte der Führungselemente derart gewählt ist, daß sich bei einer Entfernung des zweiten Abstützpunktes von der Melkleitung der Anpreßdruck auf das Schlauchanschlußteil erniedrigt und bei einer Annäherung erhöht. Dies führt zu einer selbsttätigen Kompensation der bei Verschleiß der Ringdichtung nachlassenden Federkraft, weil bei der dadurch bewirkten Absenkung des ersten Abstützpunktes ein größerer Teil der Federkraft auf diesen verlagert wird.

Das Schlauchanschlußteil kann so ausgebildet sein, daß beim Einschieben desselben in das Sattelstück die zweiten Abstützpunkte angehoben und in der Endposition des Schlauchanschlußteiles abgesenkt werden. Beim Einschieben wird dadurch der Anpreßdruck auf das Schlauchanschlußteil erniedrigt, wodurch dieser Vorgang mühelos erfolgt. In der Endposition des Schlauchanschlußteiles senken sich die zweiten Abstützpunkte wieder ab, und der dann erhöhte Anpreßdruck führt zu der gewünschen Dichtkraft.

Ausführungsbeispiele der Erfindung sind in der Zeichnung dargestellt und werden nachstehend näher erläutert. Es zeigt
- Fig. 1: eine Schnittdarstellung des Milchrohrschiebers,
- Fig. 2: den Schnitt II - II gemäß Fig. 1,
- Fig. 3: eine Draufsicht auf die Fig. 1.

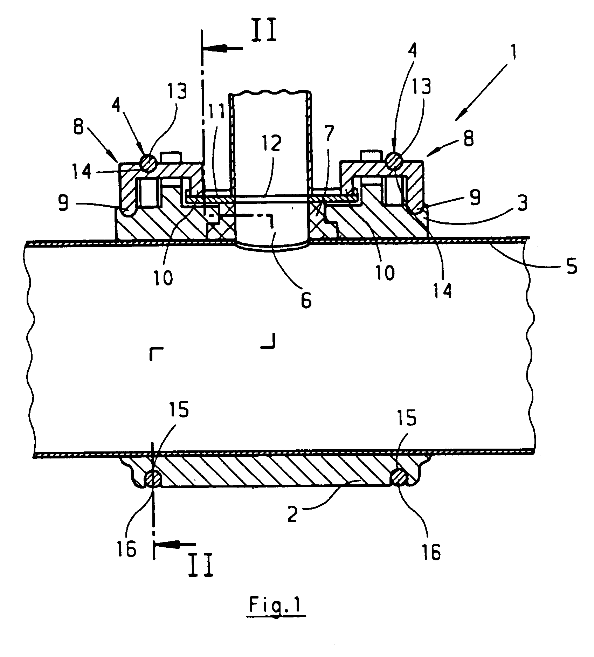

Mit 1 ist in der Fig. 1 der Milchrohrschieber bezeichnet, der aus einem Lagerbock 2 und einem Sattelstück 3 besteht, die mittels Federelemente 4 auf einer Melkleitung 5 festgeklemmt sind. Im Sattelstück 3 ist ein Durchlaß 6 vorgesehen, der über eine Ringdichtung 7 mit dem Innenraum einer Melkleitung 5 in Verbindung steht. Am Sattelstück 3 sind Führungselemente 8 angeordnet, mit einem ersten Abstützpunkt 9, der auf das Sattelstück 3 drückt und einem zweiten Abstützpunkt 10, der ein Schlauchanschlußteil 11 gegen die Ringdichtung 7 preßt. In der Endposition des Schlauchanschlußteiles 11 steht eine darin vorgesehene Öffnung 12 mit dem Durchlaß 6 in Verbindung. Die Federelemente 4 bestehen aus U-förmig gebogenen Federdraht, dessen erste Schenkel 13 in Arretierungen 14 anliegen, die auf der Oberseite der Führungselemente 8 zwischen den ersten Abstützpunkt 9 und dem zweiten Abstützpunkt 10 vorgesehen sind. Im Lagerbock 2 befinden sich Nuten 15, in die zweite Schenkel 16 der Federelemente 4 greifen.

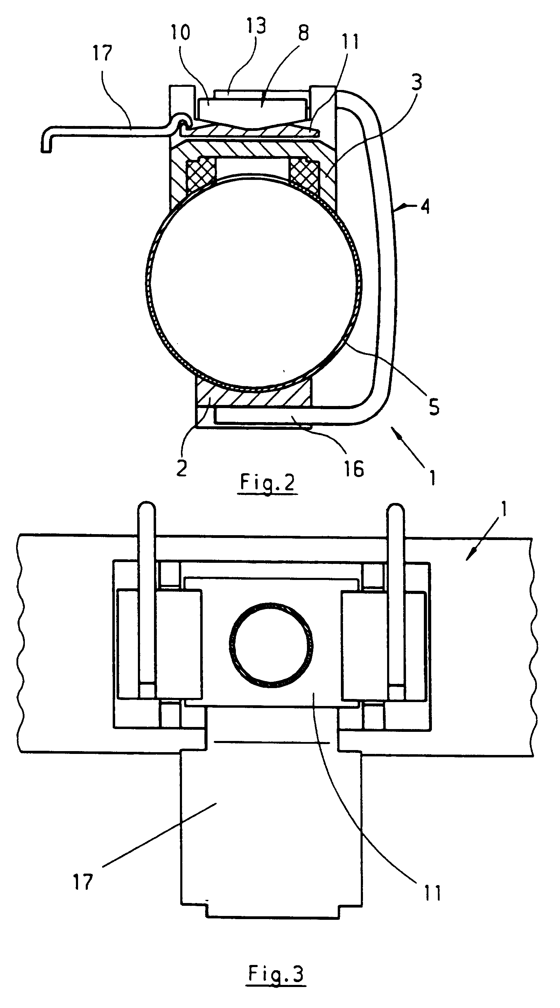

Aus der Fig. 2 ist die Form der Federelemente 4 ersichtlich und auch die Geometrie des Schlauchanschlußteiles 11 im Bereich der zweiten Abstützpunkte 10, die ein Anheben dieser Abstützpunkte beim Einschieben des Schlauchanschlußteiles 11 in das Sattelstück 3 bewirken. Das Schlauchanschlußteil 11 ist in der dargestellten Position an eine Schieberplatte 17 gekoppelt, die beim Abziehen des Schlauchanschlußteiles 11 vom Sattelstück 3 über die Ringdichtung 7 gezogen wird und dadurch den Durchlaß 6 im Sattelstück 3 verschließt. Erst danach können Schlauchanschlußteil 11 und Schieberplatte 17 entkoppelt werden. Die Federelemente 4 drücken mit ihren ersten Schenkeln 13 gegen die Führungselemente 8 und mit ihren zweiten Schenkeln 16 gegen den Lagerbock 2 und erzeugen dadurch gleichzeitig die Klemmkraft für den Milchrohrschieber 1 auf der Melkleitung 5 und die Dichtkraft auf das Schlauchanschlußteil 11.

Die Fig. 3 zeigt den Milchrohrschieber 1 mit eingeschobenen Schlauchanschlußteil 11 und die Schieberplatte 17 in Öffnungsstellung.

Beim Einschieben des Schlauchanschlußteiles 11 werden die zweiten Abstützpunkte 10 angehoben. Wegen der aus der Fig. 1 ersichtlichen Form der Führungselemente 8 verlagern sich die von den Federelementen 4 auf die Führungselemente 8 ausgeübten Kräfte in Richtung der ersten Abstützpunkte 9, wodurch sich die von den zweiten Abstützpunkten 10 ausgeübten Kräfte auf das Schlauchanschlußteil 11 verringern und damit ein müheloses Einschieben desselben ermöglichen. In der Endposition des Schlauchanschlußteiles 11 senken sich die zweiten Abstützpunkte 10 wieder ab, wodurch sich die Federkräfte in Richtung auf diese Abstützpunkte verlagert und damit eine erhöhte Anpreßkraft des Schlauchanschlußteiles 11 an die Ringdichtung 7 bewirkt. Auch beim Verschleiß der Ringdichtung 7 wird das dadurch bewirkte Abfallen der Federkräfte durch die zunehmende Verlagerung derselben in Richtung auf die zweiten Abstützpunkte 10 kompensiert.

## Patentansprüche

1. Milchrohrschieber (1), bestehend aus einer Schieberplatte (17), einem Schlauchanschlußteil (11) und einem Sattelstück (3) mit einem darin vorgesehenen Durchlaß (6), der über eine durch die Schieberplatte (17) verschließbare Ringdichtung (7) mit dem Innenraum einer Melkleitung (5) verbunden ist, wobei die Schieberplatte (17) durch Einschieben des Schlauchanschlußteiles (11) in eine Position bewegbar ist, in der die Schieberplatte (17) den Durchlaß (6) freigibt und eine im Schlauchanschlußteil (11) vorgesehene Öffnung mit dem Durchlaß (6) in Wirkverbindung steht, und der Anpreßdruck von Schieberplatte (17) und Schlauchanschlußteil (11) gegen die Ringdichtung (7) durch Führungselemente (8) erzeugt wird, **dadurch gekennzeichnet**, daß der Anpreßdruck der Führungselemente (8) durch Federelemente (4) erzeugt wird, die eine vorbestimmte Kraft auf die Führungselemente (8) in Richtung auf die Ringdichtung (7) erzeugen.

2. Milchrohrschieber nach Anspruch 1, dadurch gekennzeichnet, daß die Federelemente (4) aus U-förmig gebogenem Federdraht bestehen, dessen erster Schenkel (13) an den Führungselementen (8) anliegt und dessen zweiter Schenkel (16) an der den Führungselementen (8) gegenüberliegenden Seite der Melkleitung (5) vorgesehen sind.

3. Milchrohrschieber nach Anspruch 2, dadurch gekennzeichnet, daß die zweiten Schenkel (16) der Federelemente (4) gegen einen Lagerbock (2) anliegen, dessen Innenkontur dem Außendurchmesser der Melkleitung (5) angepaßt ist und der an seiner Außenseite mit Nuten (15) zur Aufnahme der zweiten Schenkel (16) der Federelemente (4) versehen ist.

4. Milchrohrschieber nach einem der Ansprüche 1 bis 3, dadurch gekennzeichnet, daß die Führungselemente (8) mit zwei Abstützpunkten (9,10) versehen sind, von denen der erste Abstützpunkt (9) auf das Sattelstück (3) und der zweite Abstützpunkt (10) auf das Schlauchanschlußteil (11) drückt, wobei die Führungselemente (8) zwischen den Abstützpunkten (9, 10) mit einer Arretierung (14) zur Aufnahme des ersten Schenkels (13) eines Federelementes (4) versehen sind.

5. Milchrohrschieber nach Anspruch 4, dadurch gekennzeichnet, daß die Position der Arretierung (14) und der beiden Abstützpunkte (9, 10) der Führungselemente (8) derart gewählt ist, daß sich bei einer Entfernung des zweiten Abstützpunktes (10) von der Melkleitung (5) der Anpreßdruck auf das Schlauchanschlußteil (11) erniedrigt und bei einer Annäherung erhöht.

6. Milchrohrschieber nach Anspruch 4 oder 5, dadurch gekennzeichnet, daß die Geometrie des Schlauchanschlußteiles (11) beim Einschieben desselben in das Sattelstück (3) zu einem Anheben der zweiten Abstützpunkte (10) und in der Endposition des Schlauchanschlußteiles (11) zu einem Absenken der zweiten Abstützpunkte (10) führt.

## Claims

1. Milk tap (1) consisting of a slide plate (17), a hose connector (11) and a saddlepiece (3) provided with a passage (6), which is connected to the interior of a milk line (5) via an annular gasket (7) that can be sealed by means of the slide plate (17), whereby by introducing the hose connector (11) the slide plate (17) can be moved into a position in which the slide plate (17) opens up the passage (6) and an opening in the hose connector (11) is connected with the passage (6), and the pressing force of side plate (17) and hose connector (11) against the annular gasket (7) is produced by guide elements (8), characterized in that the pressing force of the guide elements (8) is produced by spring elements (4), which generate a previously specified force on the guide elements (8) in the direction of the annular gasket (7).

2. Milk tap according to claim 1, characterized in that the spring elements (4) consists of U-shaped spring wire whose first leg (13) abuts against the guide elements (8) and whose second leg (16) are provided on the side of the milk line (5) opposite the guide elements (8).

3. Milk tap according to claim 2, characterized in that the second legs (16) of the spring elements (4) abut against a supporting block (2) wohose inner shape is adapted to the outer diameter of the milk line (5) and which is provided on its outer side with grooves (15) for receiving the second legs (16) of the spring elements (4).

4. Milk tap according to one of the claims 1 to 3, characterized in that the guide elements (8) are provided with two supporting points (9, 10) of which the first supporting point (9) presses on the saddlepiece (3) and the second supporting point (10) presses on the hose connector (11), whereby between the supporting points (9, 10) the guide elements (8) are provided with an arresting device (14) to receive the first leg (13) of a spring element (4).

5. Milk tap according to claim 4, characterized in that the position of the attesting device (14) and the two supporting points (9, 10) of the guide elements (8) is selected such that when the second supporting point (10) moves away from the milk line (5) the pressing force on the hose connector (11) decreases and increases when moving towards the milk line (5).

6. Milk tap according to claim 4 or 5, characterized in that the geometry of the hose connector (11) raises the second supporting point (10) when being introduced into the saddlepiece and lowers the second supporting point (10) in the end position of hose connector (11).

## Revendications

1. Robinet à lait (1), constitué par une glissière plate (17), un raccord de tuyau souple (11) et un demi collier (3) muni d'un canal de passage (6), relié à l'intérieur d'un lactoduc (5) via un joint annulaire (7), pouvant être fermé par la glissière plate (17), la glissière plate (17) pouvant être amenée, par déplacement du raccord de tuyau souple(11), à une position dans laquelle une glissière plate (17) ouvre le canal de passage (6) et celui-ci entre en liaison avec une ouverture prévue dans le raccord de tuyau souple (11), et une pression d'appui de la glissière plate et du raccord de tuyau souple (11) contre le joint annulaire (7) est produite grâce à des éléments de guidage (8), caractérisé en ce que la pression d'appui des éléments de guidage (8) est produite par des éléments ressort (4) qui produisent une force prédéterminée agissant sur les éléments de guidage (8) en direction du joint annulaire (7).

2. Robinet à lait selon la revendication 1, caractérisé en ce que les éléments ressort (4) sont constitués par un fil métallique à ressort courbé en "U", dont la première branche (13) repose sur les éléments de guidage (8) et dont la seconde branche (16) est disposée sur le côté du lactoduc (5) opposé aux éléments de guidage (8).

3. Robinet à lait selon la revendication 2, caractérisé en ce que les secondes branches (16) des éléments ressort (4) reposent sur un support (2) dont la paroi intérieure est adaptée au diamètre extérieur du lactoduc (5) et dont la partie extérieure est munie d'encoches (15) servant de logement des secondes branches (16) des éléments ressort (4).

4. Robinet à lait selon l'une des revendications 1 à 3, caractérisé en ce que les éléments de guidage (8) sont munis de deux points d'appui(9, 10), le premier point d'appui (9) poussant sur le demi-collier (3) et le second point d'appui poussant sur le raccord de tuyau souple (11), les éléments de guidage (8) étant munis d'une pièce d'arrêt (14) disposée entre les points d'appui (9,10), servant de logement de la première branche (13) d'un élément de ressort (4).

5. Robinet à lait selon la revendication 4,caractérisé en ce que la position de la pièce d'arrêt (14) et celle des deux points d'appui (9,10) est choisie de telle manière que, lorsque le second point d'appui (10) s'écarte du lactoduc (5), la pression d'appui agissant sur le raccord de tuyau souple (11) diminue et, lorsque le point d'appui s'approche au lactoduc, la pression d'appui augmente.

6. Robinet à lait selon la revendication 4 ou 5, caractérisé en ce que la forme du raccord de tuyau souple (11) est telle que, lorsque le raccord est enfoncé dans le demi-collier (3), les seconds points d'appui (10) sont soulevés et, dès que le raccord de tuyau souple (11) se trouve dans sa position finale, les seconds points d'appui (10) sont abaisses.
